# EUROPEAN PATENT APPLICATION

(11) **EP 1 816 638 A1**
(43) Date of publication of application: **08.08.2007**
(21) Application number: 05795572.6
(22) Date of filing: 19.10.2005
(51) Int. Cl.: G09G 5/36, H04N 1/387, G06T 3/40, G09G 5/00, G09G 5/391

(54) **IMAGE INTERPOLATION DEVICE AND DISPLAY DEVICE**

(30) Priority: 29.10.2004 JP 2004316906; 13.09.2005 JP 2005265690
(71) Applicant: FUJITSU TEN LIMITED, Kobe-shi Hyogo 652-8510 (JP)
(72) Inventor: HAMATANI, Kiyoshi, c/o FUJITSU TEN LIMITED, Hyogo 6528510 (JP); UEHARA, Satoru, c/o FUJITSU TEN LIMITED, Hyogo 6528510 (JP); OGASAWARA, Hisaya FUJITSU KANSAI-CHUBU NETTECH LTD, Osaka 5400001 (JP)
(74) Representative: Sunderland, James Harry
(86) International application number: PCT/JP2005/019182
(87) International publication number: WO 2006/046444

(57) **Abstract**

An image interpolation device (310) includes a feature quantity calculating unit (313), an image interpolation processing unit (314), a resolution conversion processing unit (315) and a display control processing unit (316). With regards to pixels positioned in an interpolation subject area and peripheral pixels of the pixels, the feature quantity calculating unit (313) calculates feature quantities of the pixels. The image interpolation processing unit (314) extracts a pixel with the largest feature quantity from among the pixels positioned in the interpolation subject area. When the feature quantity of the extracted pixel is equal to a threshold or more, the image interpolation processing unit (314) sets a pixel value of the pixel as a pixel value of interpolation pixels. The resolution conversion processing unit (315) performs a resolution conversion on image data of which the interpolation pixels have been interpolated by the image interpolation processing unit (314). The display control processing unit (316) performs control to realign a plurality of pieces of image data including at least one piece of image data to which the resolution conversion has been performed by the resolution conversion processing unit (315) to a predetermined display configuration and display the realigned data.

## Description

### TECHNICAL FIELD

The present invention relates to a technology for interpolating a pixel value of a certain pixel from a pixel value of a pixel positioned near the certain pixel.

### BACKGROUND ART

Japanese Patent Application Laid-open No. H6-186526 and Japanese Patent Application Laid-open No.2000-137443 disclose a display device that can simultaneously display two screens on one liquid crystal display (LCD). Such a display device can be used, for example, to display differing screens to a person seating in a driver's seat and to a person seating in a passenger seat. Japanese Patent Application Laid-open No. H11-331876 and Japanese Patent Application Laid-open No. H9-46622 disclose a display device that can simultaneously display two types of images on a same screen.

When image data from a plurality of video image sources are displayed in one display unit, a resolution conversion (for example, a resolution conversion in which horizontal resolutions of image data of each video image are halved and displayed by a "two-screen display") is required to be performed on each piece of image data. However, pixels are merely culled in the resolution conversion, an unrecognizable video image may be obtained depending on a display content of the video image.

Japanese Patent Application Laid-open No. 2004-104368 discloses a technology for solving the above-described problem. Specifically, an average or a weighted average of a plurality of pieces of pixel data from a periphery of a position at which image data are interpolated is calculated, and interpolation data are created from the calculated average or the weighted average.

### DISCLOSURE OF INVENTION

### PROBLEM TO BE SOLVED BY THE INVENTION

However, in the technology disclosed in Japanese Patent Application Laid-open No. 2004-104368, the interpolation data are uniformly created. In other words, the interpolation data are uniformly created from the average or the weighted average of the pixel data from the periphery of the position at which the image data are interpolated. This method therefore results in creation of interpolation data in which pixels characterizing an image are ambiguously processed. As a result, there is a problem in this method that the image quality can significantly degrade when the resolution conversion of the image data is performed.

For example, although luminance levels of adjacent pixels are divergent, because interpolation data is created by averaging pixels and peripheral pixels, a luminance level of a pixel characterizing an image in an original image gets smoothed due to the luminance levels of peripheral pixels. Therefore, the interpolation data are created in which pixels characterizing the image are ambiguously processed. As a result, there is a problem in that the image quality significantly degrades when the resolution conversion is performed on the image data.

The present invention has been achieved to at least solve the above-described issues (problems) of the conventional art. An object of the present invention is to provide an image interpolation device and a display device that can suppress image quality degradation accompanying a resolution conversion of image data.

### MEANS FOR SOLVING PROBLEM

To solve the above-described issues and achieve the object, based on pixels positioned in an interpolation subject area and peripheral pixels of the pixels, the image interpolation device and the display device of the present invention calculate feature quantities of the pixels and determine pixel values of interpolation pixels depending on whether the pixels are characteristic of an image.

### EFFECT OF THE INVENTION

The image interpolation device and the display device of the present invention effectively achieve an image interpolation device and a display device that suppress the image quality degradation accompanying the resolution conversion of the image data and maintain characteristics of the original image.

### BRIEF DESCRIPTION OF DRAWINGS

[Fig. 1] Schematic diagram of a display device according to an embodiment of the present invention.
[Fig. 2] Perspective view of an interior of a vehicle with the display device shown in Fig. 1 is mounted on it.
[Fig. 3] Cross-sectional diagram of a display unit shown in Fig. 1.
[Fig. 4] Schematic diagram of a configuration of a display panel viewed from the front side.
[Fig. 5] Circuit diagram of an overview of a TFT substrate.
[Fig. 6] Block diagram of the display device shown in Fig. 1.
[Fig. 7] Block diagram of an image outputting unit 211 shown in Fig. 6.
[Fig. 8] Block diagram of a control unit 200 shown in Fig. 6.
[Fig. 9] Block diagram of a memory 218 shown in Fig. 6.
[Fig. 10] Block diagram of a configuration of an image interpolation device according to a first example.
[Fig. 11A] Explanatory diagram for explaining a two-screen display configuration.
[Fig. 11B] Explanatory diagram for explaining a two-perspective display configuration.
[Fig. 12] Explanatory diagram for explaining a feature quantity calculation.
[Fig. 13] Schematic diagram for explaining process details of a feature quantity calculating unit and an image interpolation processing unit.
[Fig. 14] Schematic diagram for explaining process details of a resolution conversion processing unit and a display control processing unit.
[Fig. 15A] Explanatory diagram (1) for explaining a specific example of an image interpolation process.
[Fig. 15B] Explanatory diagram (2) for explaining a specific example of the image interpolation process.
[Fig. 16] Flowchart of the image interpolation process.
[Fig. 17] Explanatory diagram for explaining a variation example of the display device shown in Fig. 1.
[Fig. 18] Explanatory diagram for explaining a variation example of the display device shown in Fig. 1.

### EXPLANATIONS OF LETTERS OR NUMERALS

1: first image source
2: second image source
3: first image data
4: second image data
5: display controlling unit
6: display data
7: display unit
8: first display image
9: second display image
10: observer
11: observer
12: passenger seat
13: driver's seat
14: windshield
15: operating unit
16: speaker
100: liquid crystal panel
101: backlight
102: polarizing plate
103: polarizing plate
104: TFT substrate
105: liquid crystal layer
106: color filter substrate
107: glass substrate
108: parallax barrier
109: pixel for left-side (passenger seat side) display
110: pixel for right-side (driver's seat side) display
111: display panel driving unit
112: scan line driver circuit
113: data line driver circuit
114: TFT element
115 to 118: data line
119 to 121: scan line
122: pixel electrode
123: sub-pixel
124: touch panel
200: control unit
201: CD/MD playback unit
202: radio receiving unit
203: TV receiving unit
204: DVD playback unit
205: hard disk (HD) playback unit
206: navigation unit
207: distribution circuit
208: first image adjustment circuit
209: second image adjustment circuit
210: sound adjustment circuit
211: image outputting unit
212: VICS information receiving unit
213: GPS information receiving unit
214: selector
215: operating unit
216: remote control transmitting and receiving unit
217: remote control
218: memory
219: external audio/video inputting unit
220: camera
221: brightness detecting unit
222: passenger detecting unit
223: rear display unit
224: ETC on-board device
225: communication unit
226: first write circuit
227: second write circuit
228: video RAM (VRAM)
229: interface
230: CPU
231: storing unit
232: data storing unit
233: first screen RAM
234: second screen RAM
235: image quality setting information storing unit
236: counter-environment adjustment value holding unit
310: image interpolation device
311: image data inputting unit
312: image data input controlling unit
313: feature quantity calculating unit
314: image interpolation processing unit
315: resolution conversion processing unit
316: display control processing unit
317: display unit
320: AV unit
330: navigation unit

### BEST MODE(S) FOR CARRYING OUT THE INVENTION

Exemplary embodiments of the present invention will be below described with reference to the drawings. However, the technical scope of the present invention is not limited to the embodiments and extends to include the invention described within the scope of claims and inventions equivalent thereto.

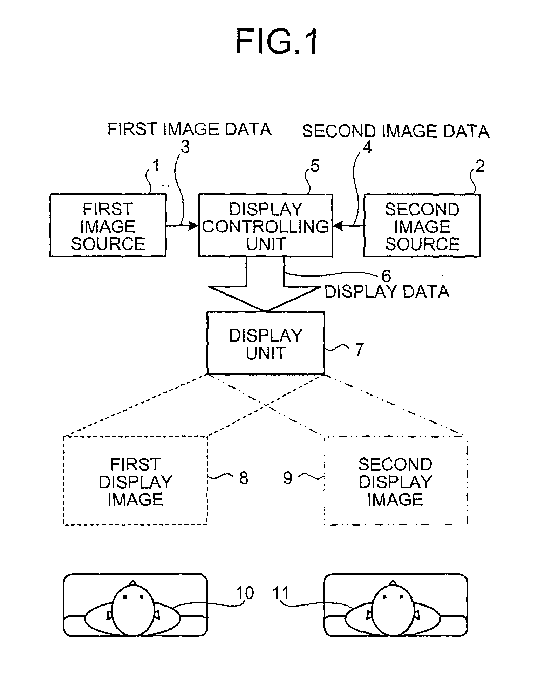

Fig. 1 is a schematic diagram of a display device of the present invention. Reference numeral 1 indicates a first image source. Reference numeral 2 indicates a second image source. Reference numeral 3 indicates first image data from the first image source. Reference numeral 4 indicates second image data from the second image source. Reference numeral 5 indicates a display controlling unit. Reference numeral 6 indicates display data. Reference numeral 7 indicates a display unit (for example, a liquid crystal panel). Reference numeral 8 indicates a first display image based on the first image source 1. Reference numeral 9 indicates a second display image based on the second image source 2. Reference numeral 10 indicates an observer (user) positioned to a left side of the display unit 7. Reference numeral 11 indicates an observer (user) positioned to a right side of the display unit 7.

The schematic diagram in Fig. 1 schematically shows the following. That is, depending on relative positions of the observer 10 and the observer 11 with respect to the display unit 7 or, in other words, depending on viewing angles to the display unit 7, in effect, the observer 10 can view the first display image 8 and the observer 11 can view the second display image 9, simultaneously. In addition, each display image 8 and 9 can be viewed over an entire display surface of the display unit 7. In Fig. 1, the first image source 1 is, for example, movie footage from a digital versatile disc (DVD) player or an image received by a television receiver. The second image source 2 is, for example, a map or a route guidance image from a car navigation device. Respective first image data 3 and second image data 4 are supplied to the display controlling unit 5 and processed to allow the display unit 7 to effectively simultaneously display the first image data 3 and the second image data 4.

The display unit 7 that is supplied with the display data 6 from the display controlling unit 5 includes a liquid crystal panel or the like. The liquid crystal panel includes a parallax barrier, described hereafter. Half of all pixels in a lateral direction in the display unit 7 are used to display the first display image 8, based on the first image source 1. Remaining half of the pixels are used to display the second display image 9, based on the second image source 2. The observer 10 positioned to the left side of the display unit 7 can only see the pixels corresponding to the first display image 8. The observer 10 cannot effectively see the second display image 9, because the second display image 9 is blocked by the parallax barrier formed on a surface of the display unit 7. At the same time, the observer 11 positioned to the right side of the display unit 7 can only see the pixels corresponding to the second display image 9. The observer 11 cannot effectively see the first display image 8, because the first display image 8 is blocked by the parallax barrier. Configurations disclosed in, for example, Japanese Patent Application Laid-open No. H10-123462 and Japanese Patent Application Laid-open No. H11-84131 can be applied with regards to the parallax barrier.

According to the configuration, differing information and contents can be provided to the user on the left and the user on the right, using a single screen. If the first image source and the second image source are the same, the user on the left and the user on the right can view a same image in a conventional manner.

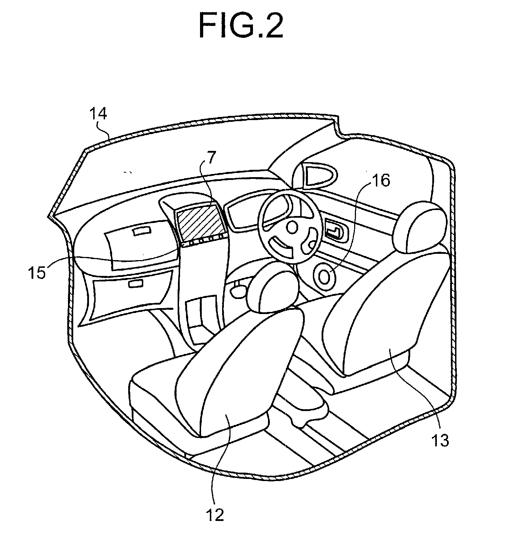

Fig. 2 is a perspective view of a mounting example in which a multi-view display device of the present invention is mounted on a vehicle. Reference numeral 12 indicates a passenger seat. Reference numeral 13 indicates a driver's seat. Reference numeral 14 indicates a windshield. Reference numeral 15 indicates an operating unit. Reference numeral 16 indicates a speaker.

The display unit 7 of the multi-view display device in Fig. 1 is, for example, disposed in a dashboard area that is almost halfway between the driver's seat 13 and the passenger seat 12, as shown in Fig. 2. Various operations of the multi-view display device are performed through operation of a touch panel (not shown), the operating unit 15, or an infrared or wireless remote controller (not shown). The touch panel is formed integrally on the surface of the display device 7. The speaker 16 is disposed on each door of the vehicle and outputs sounds, warning tones, and the like associated with display images.

The observer 11 in Fig. 1 sits in the driver's seat 13. The observer 10 sits in the passenger seat 12. An image that can be viewed from a first visual direction to the display unit 7 (the driver's seat side) is, for example, the map from the car navigation device. An image that can be effectively simultaneously viewed from a second visual direction (the passenger seat side) is, for example, the television reception image or the DVD movie image. Therefore, a passenger in the passenger seat 12 can enjoy television and DVDs at the same time a driver in the driver's seat 13 is receiving driving assistance through car navigation. The respective images are displayed, for example, using an entire seven-inch screen. Therefore, screen size is not reduced as occurs in conventional multi-window displays. In other words, optimal information and contents are respectively provided to the driver and the passenger, as if each person is provided with an individual, dedicated display.

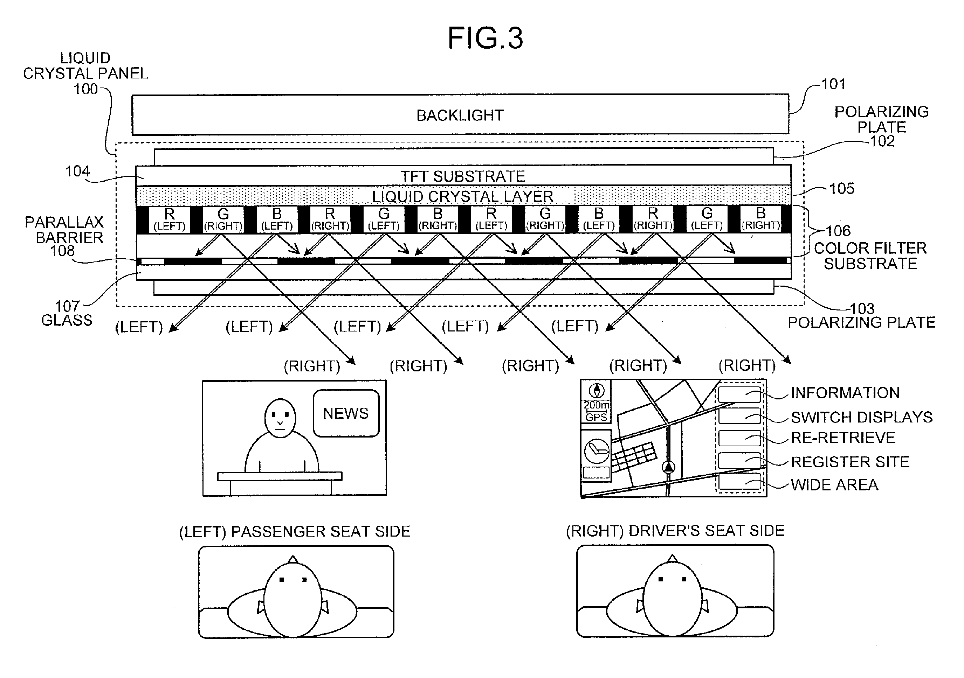

Fig. 3 is a schematic diagram of a cross-sectional configuration of the display unit 7. Reference numeral 100 indicates a liquid crystal panel. Reference numeral 101 indicates a backlight. Reference numeral 102 indicates a polarizing plate provided on a backlight side of the liquid crystal panel. Reference numeral 103 indicates a polarizing plate disposed on a front surface of the liquid crystal panel on a light-emitting direction side. Reference numeral 104 indicates a thin film transistor (TFT) substrate. Reference numeral 105 indicates a liquid crystal layer. Reference numeral 106 indicates a color filter substrate. Reference numeral 107 indicates a glass substrate. Reference numeral 108 indicates the parallax barrier. The liquid crystal panel 100 is configured as follows. Two polarizing plates 102 and 103 sandwich a pair of substrates, the parallax barrier 108, and the glass substrate 107. The pair of substrates is the TFT substrate 104 and the color filter substrate 106, between which the liquid crystal layer 105 is held. The color filter substrate 106 is disposed facing the TFT substrate 104. The parallax barrier 108 and the glass substrate 107 are disposed on a front surface of the pair of substrates on the light-emitting direction side. The liquid crystal panel 100 is disposed slightly away from the backlight 101. The liquid crystal panel 100 has pixels having an RGB color (three primary colors) configuration.

Each pixel in the liquid crystal panel 100 is divided into pixels used for a left-side (passenger seat side) display and pixels used for a right-side (driver's seat side) display and is display-controlled. The pixels used for the left-side (passenger seat side) display are blocked by the parallax barrier 108 from being displayed to the right side (driver's seat side). The pixels used for the left-side (passenger seat side) display can be viewed from the left side (passenger seat side). Pixels used for the right-side (driver's seat side) display are blocked by the parallax barrier 108 from being displayed to the left side (passenger seat side). The pixels used for the right-side (driver's seat side) display can be viewed from the right side (driver's seat side). As a result, differing displays can be provided to the driver's seat and the passenger. In other words, map information for navigation can be provided to the driver. At the same time, a movie from a DVD or the like can be shown to the passenger. If the configurations of the parallax barrier 108 and each pixel in the liquid crystal panel are changed, a configuration is possible in which differing images are displayed in multiple directions, such as three directions. The parallax barrier itself can include an electronically-drivable liquid crystal shutter or the like, and viewing angles can be changed.

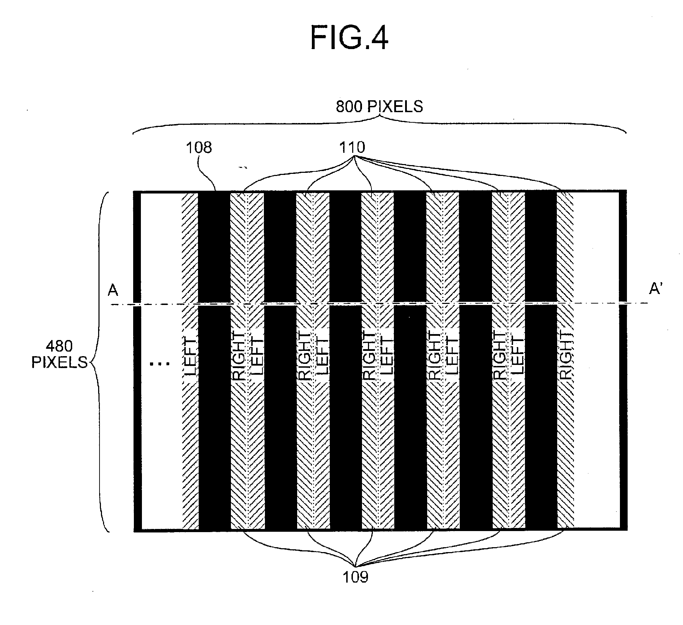

Fig. 4 is a schematic diagram of a configuration of the display panel viewed from a front side. Fig. 3 is a cross-sectional diagram taken along line A-A' in Fig. 4. Reference numeral 109 indicates a pixel for the left-side (passenger seat side) display. Reference numeral 110 indicates a pixel for the right-side (driver's seat side) display. Fig. 3 and Fig. 4 show a portion of the liquid crystal panel 100 in which, for example, 800 pixels are aligned in a lateral direction and 480 pixels are aligned in a longitudinal direction. Pixels for the left-side (passenger seat side) display 109 and pixels for the right-side (driver's seat side) display 110 are grouped in the longitudinal direction and are alternately aligned. Parallax barriers 108 are disposed in the lateral direction with a certain amount of spacing and are uniform in the longitudinal direction. As a result, when the display panel is viewed from the left side, the parallax barriers 108 block and hide the right-side pixels 110. The left-side pixels 109 display 109 can be viewed. When similarly viewed from the right side, the parallax barriers 108 block and hide the left-side pixels 109. The right-side pixels 110 can be viewed. Furthermore, the left-side pixels 109 and the right-side pixels 110 can both be viewed near the front side. Therefore, the left-side display image and the right-side display image effectively appear to be overlapping. The left-side pixels 109 and the right-side pixels 110 in Fig. 4 that are alternately aligned have RGB colors, as shown in Fig. 3. Each group in the longitudinal direction can include a single color, such as an R row, a G row, or a B row. Each group in the longitudinal direction can be configured as an example combining a plurality of RGB.

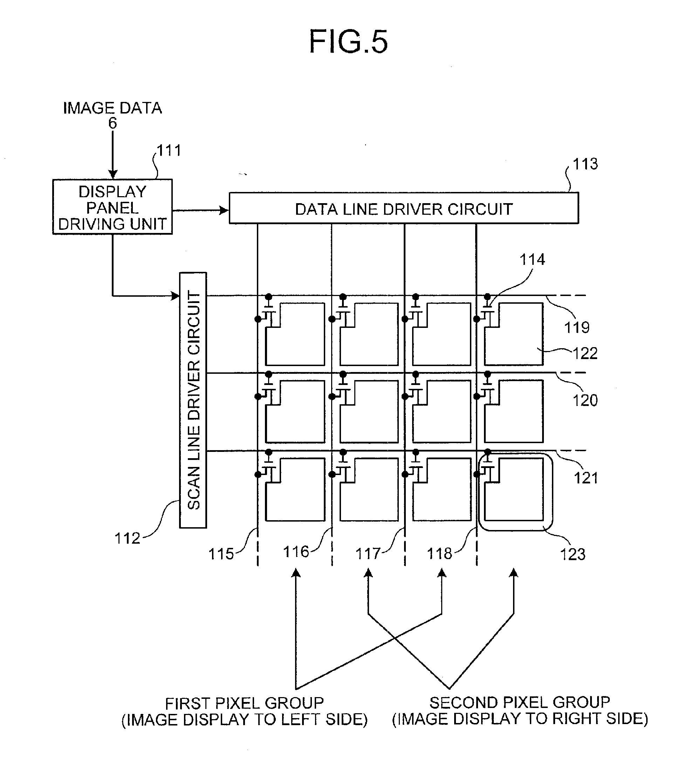

Fig. 5 is a circuit diagram of an overview of the TFT substrate 104. Reference numeral 111 indicates a display panel driving unit. Reference numeral 112 indicates a scan line driver circuit. Reference numeral 113 indicates a data line driver circuit. Reference numeral 114 indicates a TFT element. Reference numerals 115 to 118 indicate data lines. Reference numerals 119 to 121 indicate scan lines. Reference numeral 122 indicates a pixel electrode. Reference numeral 123 indicates a sub-pixel. A plurality of sub-pixels 123 is formed, with an area surrounded by respective data lines 115 to 118 and respective scan lines 119 to 121 as one unit. The pixel electrode 122 and the TFT element 114 are formed in each sub-pixel. The pixel electrode 122 applies a voltage to the liquid crystal layer 105. The TFT element 114 switching-controls the pixel electrode 122. The display panel driving unit 111 controls driving timings of the scan line driver circuit 112 and the data line driver circuit 113. The scan line driver circuit 112 performs selective scanning of the TFT element 114. The data line driver circuit 113 controls the voltage applied to the pixel electrode 122.

Based on composite data of the first image data and the second image data or individual first image data and second image data, the sub-pixels transmits, for example, first pixel data (for left-side image display) to a data line 115 and a data line 117 and second pixel data (for right-side image display) to a data line 116 and a data line 118. As a result, a first image data group displaying a first image and a second image data group displaying a second image are formed.

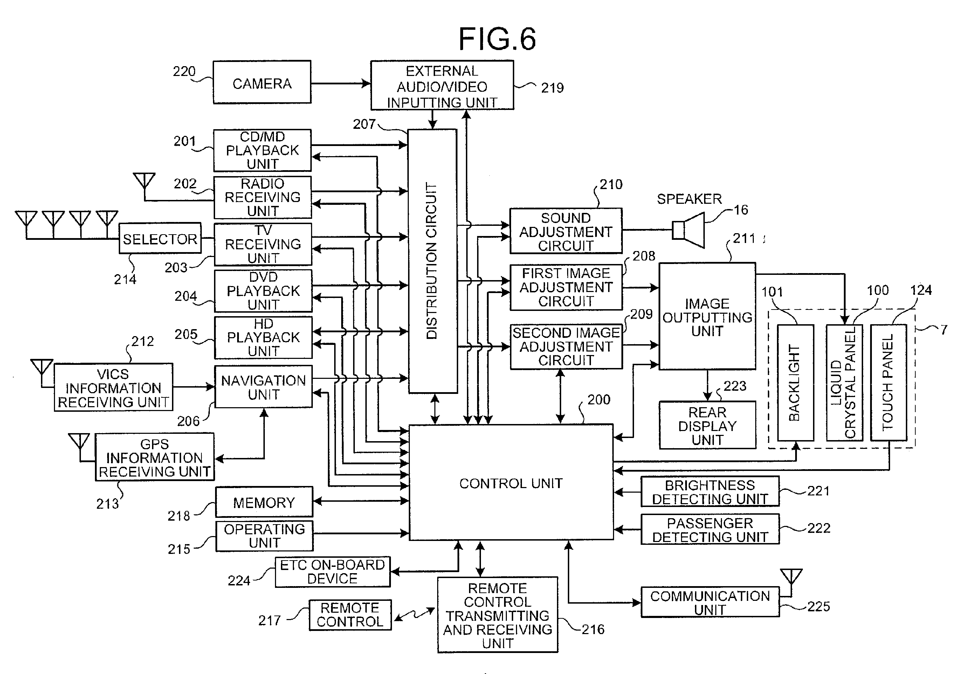

Fig. 6 is a block diagram of an overview of the display device of the present invention. Fig. 6 is an example of an application of the display device to a so-called Audio/Visual Navigation multi-functional device. Reference numeral 124 indicates the touch panel. Reference numeral 200 indicates a control unit. Reference numeral 201 indicates a compact disc (CD)/minidisc (MD) playback unit. Reference numeral 202 indicates a radio receiving unit. Reference numeral 203 indicates a television (TV) receiving unit. Reference numeral 204 indicates a DVD playback unit. Reference numeral 205 indicates a hard disk (HD) playback unit. Reference numeral 206 indicates a navigation unit. Reference numeral 207 indicates a distribution circuit. Reference numeral 208 indicates a first image adjustment circuit. Reference numeral 209 indicates a second image adjustment circuit. Reference numeral 210 indicates a sound adjustment circuit. Reference numeral 211 indicates an image outputting unit. Reference numeral 212 indicates a vehicle information and communication system (VICS) information receiving unit. Reference numeral 213 indicates a global positioning system (GPS) information receiving unit. Reference numeral 214 indicates a selector. Reference numeral 215 indicates an operating unit. Reference numeral 216 indicates a remote control transmitting and receiving unit. Reference numeral 217 indicates a remote control. Reference numeral 218 indicates a memory. Reference numeral 219 indicates an external audio/video inputting unit. Reference numeral 220 indicates a camera. Reference numeral 221 indicates a brightness detecting unit. Reference numeral 222 indicates a passenger detecting unit. Reference numeral 223 indicates a rear display unit. Reference numeral 224 indicates an electronic toll collection (ETC) on-board device. Reference numeral 225 indicates a communication unit.

The display unit 7 includes the touch panel 124, the liquid crystal panel 100, and the backlight 101. As described above, the liquid crystal panel 100 in the display unit 7 can effectively simultaneously display the image viewed from the driver's seat side that is a first viewing direction and the image viewed from the passenger seat side that is a second viewing direction. The display unit 7 can also use a flat-panel display other than the liquid crystal display, such as an organic electroluminescent (EL) display panel, a plasma display panel, or a cold cathode flat-panel display.

The control unit 200 respectively distributes images and sounds from various sources (the CD/MD playback unit 201, the radio receiving unit 202, the TV receiving unit 203, the DVD playback unit 204, the HD playback unit 205, and the navigation unit 206) using the distribution circuit 207. The images are distributed to the first image adjustment circuit 208 and the second image adjustment circuit 209. The sounds are distributed to the sound adjustment circuit 210. The first image adjustment circuit 208 and the second image adjustment circuit 209 adjust luminosity, tone, contrast, and the like. Each adjusted image is displayed in the display unit 7 through the image outputting unit 211. The sound adjustment circuit 210 adjusts distribution to each speaker, volume, and sound. The adjusted sound is outputted from the speaker 16.

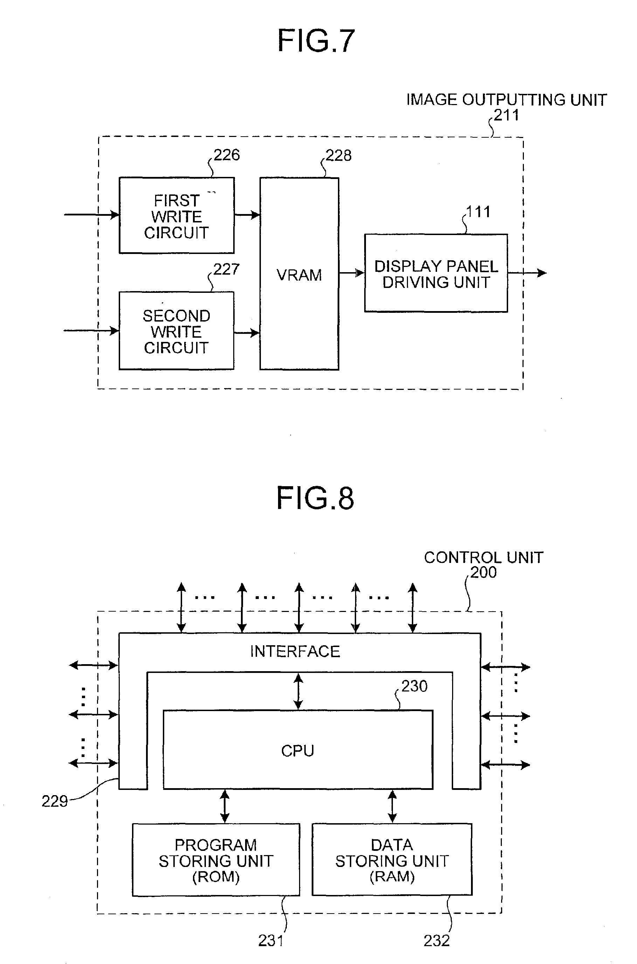

Fig. 7 is a block diagram of an overview of the image outputting unit 211. Reference numeral 226 indicates a first write circuit. Reference numeral 227 indicates a second write circuit. Reference numeral 228 indicates a video random access memory (VRAM).

The image outputting unit 211 includes, for example, the first write circuit 226, the second write circuit 227, the VRAM 228, and the display panel driving unit 11, as shown in Fig. 7. For example, the first write circuit 226 writes to a corresponding area in the VRAM 228, based on image data corresponding with odd-numbered rows within the image data adjusted in the first image adjustment circuit 208 (in other words, image data for the first display image 8 in Fig. 1). The second write circuit 227 writes to a corresponding area in the VRAM 228, based on image data corresponding with even-numbered rows within the image data adjusted in the second image adjustment circuit 209 (in other words, image data for the second display image 9 in Fig. 1). The display panel driving unit 111 is a circuit used to drive the liquid crystal panel 100. Based on the image data held in the VRAM 228 (the composite data of the first image data and the second image data), the display panel driving unit 11 drives corresponding pixels of the liquid crystal display panel 100. The image data are written in the VRAM 228 so as to correspond with images for multi-view display, in which the first image data and the second image data are combined. Therefore, only one driving circuit is required. Operations of the driving circuit are the same as operations of a driving circuit in an ordinary liquid crystal display device. As another configuration, use of a first display panel driving circuit and a second display panel driving circuit can be considered. In another configuration, the first image data and the second image data are not combined. The first display panel driving circuit and the second display panel driving circuit drive corresponding pixels of the liquid crystal display panel based on the respective image data.

An example of the various sources shown in Fig. 6 will be described. When the HD playback unit 205 is selected, music data, such as an MP3 file, image data, such as a JPEG file, map data for navigation, and the like that are stored in the HD are read. A menu display for selecting the music data and image data can be displayed in the display unit 7.

The navigation unit 206 includes a map information storing unit storing map information used for navigation. The navigation unit 206 can obtain information from the VICS information receiving unit 212 and the GPS information receiving unit 213. The navigation unit 206 can create an image for a navigation operation and display the image. The TV receiving unit 203 receives analog TV broadcast waves and digital TV broadcast waves from an antenna, via the selector 214.

Fig. 8 is a block diagram of an overview of the control unit 200. Reference numeral 229 indicates an interface. Reference numeral 230 indicates a central processing unit (CPU). Reference numeral 231 indicates a storing unit. Reference numeral 232 indicates a data storing unit.

The control unit 200 controls the distribution circuit 207 and the various sources. The control unit 200 allows display for two selected sources or one selected source. The control unit 200 also allows the display unit 7 to display an operation menu display used to control the various sources. As shown in Fig. 8, the control unit 200 includes a microprocessor and the like. The control unit 200 includes the CPU 230 that integrally controls each component and each circuit within the display device, via the interface 229. A program storing unit 231 and the data storing unit 232 are provided in the CPU 230. The program storing unit 231 is a read-only memory (ROM) holding various programs required to operate the display device. The data storing unit 232 is a random access memory (RAM) holding various data. The ROM, the RAM, and the like can be included within the CPU 230 or can be provided externally. The ROM can be an electronically re-writable, non-volatile memory, such as a flash memory.

The user can control the various sources using the touch panel 124 mounted on a front surface of the display unit 7 and switches provided in the periphery of the display unit 7. Alternatively, the user can perform input operations for speech recognition and the like and selection operations using the operating unit 215. The user can also perform the input operations or the selection operations using the remote control 217, via the remote control transmitting and receiving unit 216. In adherence to the operations of the touch panel 124 and the operating unit 215, the control unit 200 performs control, including the various sources. The control unit 200 is configured to allow control of respective volumes of a plurality of speakers 16 provided within the vehicle, as shown in Fig. 2, using the sound adjustment circuit 210. The control unit 200 also stores various setting information, such as image quality setting information, programs, and vehicle information, in the memory 218.

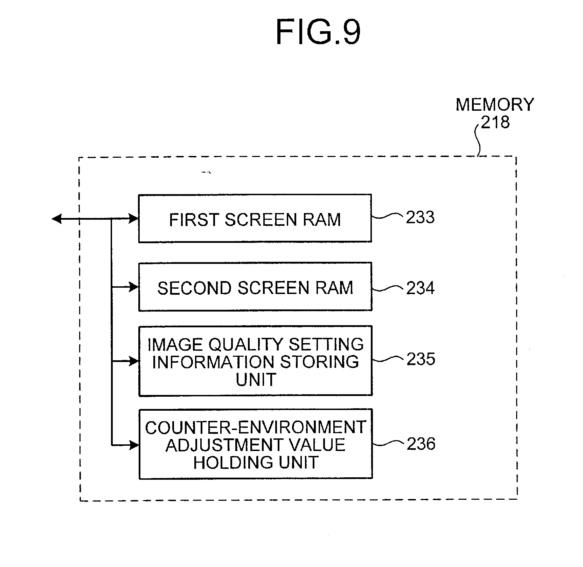

Fig. 9 is a block diagram of an overview of the memory 218. Reference numeral 233 indicates a first screen RAM. Reference numeral 234 indicates a second screen RAM. Reference numeral 235 indicates an image quality setting information storing unit. Reference numeral 236 indicates a counter-environment adjustment value holding unit.

The memory 218 includes, for example, the first screen RAM 233, the second screen RAM 234, the image quality setting information storing unit 235, and the counter-environment adjustment holding unit 236, as shown in Fig. 9. Adjustment values for the image quality of the first image and the second image set by the user can be respectively written in the first screen RAM 233 and the second screen RAM 234. The image quality setting information storing unit 235 selectably stores, in advance, adjustment values in a plurality of stages. The adjustment values are used for respective image adjustments of the first image and the second image. The counter-environment adjustment value holding unit 236 holds image quality adjustment states of the first image and the second image with respect to surrounding environments. The image quality setting information storing unit 235 and the counter-environment adjustment value holding unit 236 include the electronically re-writable, non-volatile memory, such as the flash memory, or a volatile memory that is backed up using a battery.

Images from, for example, a camera 220 for rear-monitoring that is connected to the external audio/video inputting unit 219 can be displayed in the display unit 7. Aside from the camera 220 for rear-monitoring, a video camera, a game console, and the like can be connected to the external audio/video inputting unit 219.

The control unit 200 can change settings for normal positions of outputted images and sounds, and the like, based on information detected by the brightness detecting unit 221 (for example, light switches and optical sensors in the vehicle) and the passenger detecting unit 222 (for example, pressure sensors provided in the seats).

Reference number 223 indicates a rear display unit provided for a backseat of the vehicle. The same image as that displayed in the display unit 7 or one of the image for the driver's seat or the image for the passenger seat can be displayed, via the image outputting unit 211.

The control unit 200 displays a toll display and the like from the ETC on-board device 250. The control unit 200 can control the communication unit 225 for wirelessly connecting a mobile phone and the like and perform display related to the wireless connection.

Next, an image interpolation process performed in the display device will be described. In the schematic diagram in Fig. 1, the display controlling unit 5 performs the image interpolation process within the display device. In the block diagram in Fig. 6, the first image adjustment circuit and the second image adjustment circuit perform the image interpolation process. However, to simplify explanations below, an image interpolation device in which areas related to the image interpolation process are particularly extracted will be described.

An exemplary example of when the image interpolation device of the present invention is mounted on the vehicle is below described in detail, with reference to the accompanying drawings. Herebelow, after an overview and characteristics of the image interpolation device of the present invention are described, an image interpolation device of a first example will be described. Lastly, various variation examples (second example) will be described as another example.

### Overview and characteristics

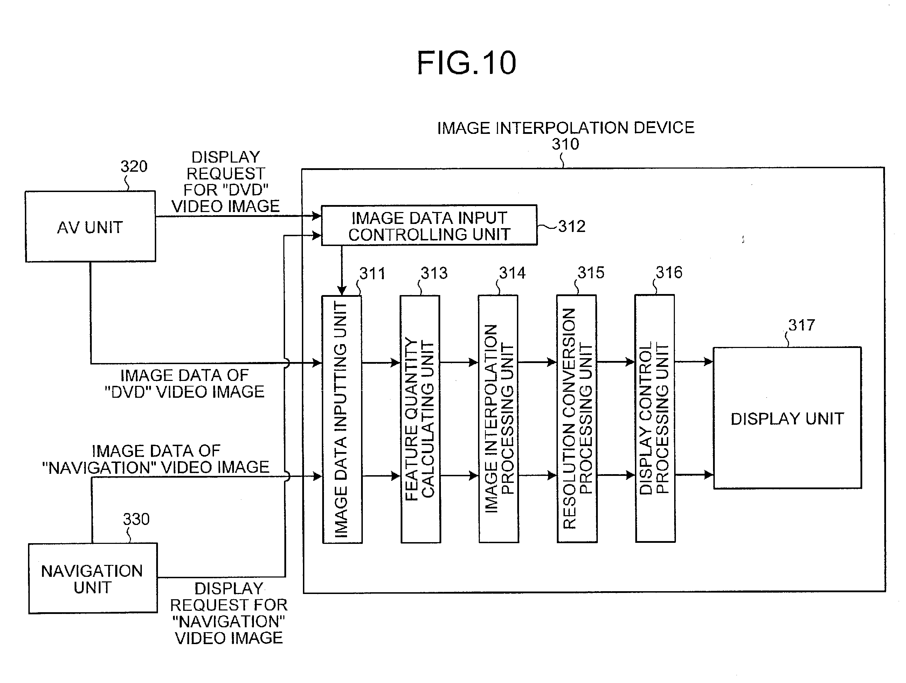

First, the overview and the characteristics of the image interpolation device of the present invention will be described. Fig. 10 is a block diagram of a configuration of the image interpolation device according to the first example. An image interpolation device 310 is connected to an audio/visual (AV) unit 320 and a navigation unit 330.

The AV unit 320 is a DVD player that reads video signals stored on a DVD disc (not shown) and outputs the signals to the image interpolation device 310. Specifically, the AV unit 320 issues a display request for DVD video images, based on an instruction from the passenger in the vehicle, and outputs image data of the DVD video images to the image interpolation device 310. The AV unit 320 is not limited to the DVD player and can include features for compact disc, hard disk, radio, television, and the like.

The navigation unit 330 is a device that performs route guidance, based on planned route information set in advance and positional information of an own vehicle. Specifically, the navigation unit 330 creates a "navigation" video image, based on the planned route information of the own vehicle set by the passenger of the vehicle (for example, the driver) and positional information transmitted from an artificial satellite. The positional information is obtained by a GPS receiver. The navigation unit 330 outputs image data of the created "navigation" video image to the image interpolation device 310.

When the AV unit 320 and the navigation unit 330 are mounted on the vehicle in this way, a display unit 317 in the image interpolation device 310 displays the DVD video images outputted from the AV unit 320 and the navigation video images outputted from the navigation unit 330. According to the first example, a resolution of the display device 317 is 800x480. A resolution of the image data of the DVD video image is 800x480. A resolution of the image data of the navigation video image is 800x480.

At this time, two 800x480 images are required to be displayed in the display unit 317 having the resolution of 800x480, if the display unit 317 receives display requests from both the AV unit 320 and the navigation unit 330.

Therefore, when display is performed using a two-screen display configuration or a two-perspective display configuration so that respective images do not overlap, a 1/2 horizontal resolution conversion is required to be performed on the image data of the DVD video images and the image data of the navigation video images to be displayed.

As shown in Fig. 2, the two-screen display configuration vertically divides a screen of the display unit 317 and displays a DVD video image v1 and a navigation video image v2 so that the two images can be viewed from both the passenger on the driver's seat side and passenger on the passenger seat side. The two-screen display configuration is an optimal configuration when both the passenger on the driver's seat side and the passenger on passenger seat side are to view both video images.

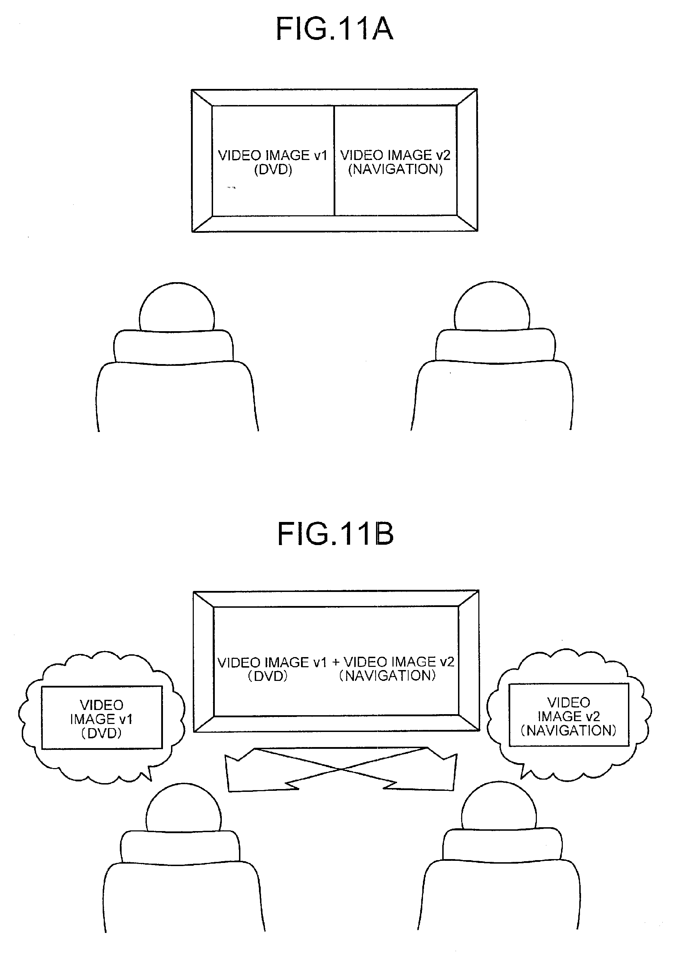

As shown in Fig. 11B, in the two-perspective display configuration, the display unit 317 is provided with a parallax optical device (for example, a vertical transmission slit) so that the passenger on the driver's seat side and the passenger on the passenger seat side can respectively view different video images. A viewer in a right direction relative to the display unit 317 (in other words, the passenger on the driver's seat side) is allowed to view the navigation video image v2. A viewer in a left direction relative to the display unit 317 (in other words, the passengers on the passenger seat side) is allowed to view the DVD video image v1. The two-perspective display configuration is optimal for when preventing the passenger on the driver's seat side from looking away from the road when driving.

According to the first example, the image interpolation process is performed only on the image data of the navigation video image. A processing subject of the image interpolation process is limited to only the navigation video image in this way for a following reason. Pixel defects occur in characters, symbols, and the like as a result of the resolution conversion being performed on the image data of the navigation video image. Therefore, a situation in which contents of the video image become unrecognizable because of the pixel defects tends to occur easily. However, it goes without saying that, as another example, the image interpolation process can be performed on both the DVD video image v1 and the navigation video image v2.

A main characteristic of the image interpolation device 310 of the present invention is the image interpolation process. In the image interpolation process, with regards to pixels positioned in an interpolation subject area and peripheral pixels of the pixels, feature quantities of the pixels are calculated. Based on the calculated feature quantities of the pixels positioned in the interpolation subject area, pixel values of interpolation pixels are determined. As a result of the image interpolation process, the image quality degradation accompanying the resolution conversion of the image data can be suppressed.

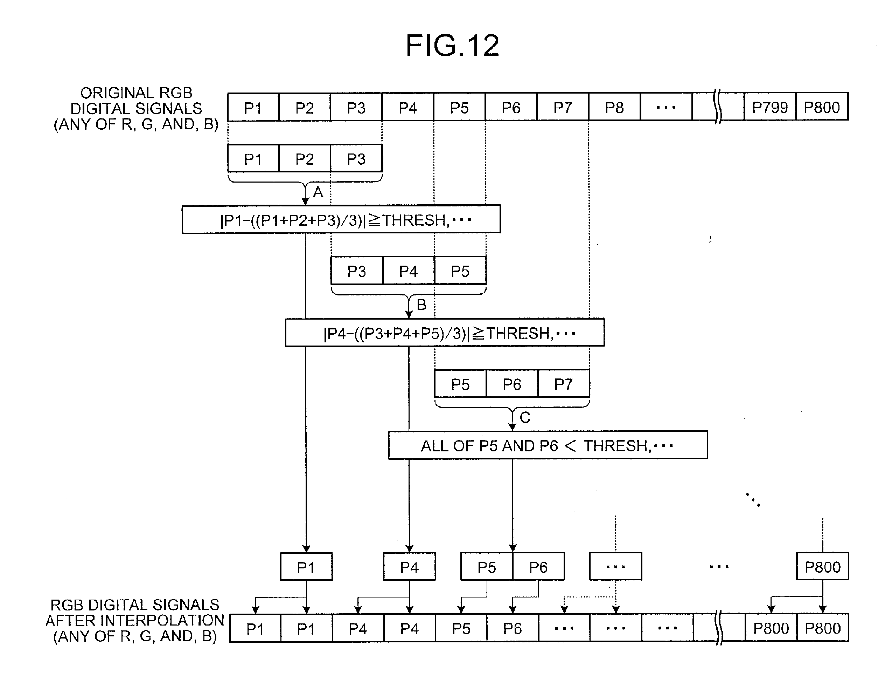

The main characteristic will be described in detail. As shown in Fig. 12, with regards to the pixels positioned in the interpolation subject area and the peripheral pixels of the pixels, the image interpolation device 310 calculates the feature quantities of the pixels in an original image data of the navigation video image v2. The 1/2 horizontal resolution conversion is performed in the first example. Therefore, the interpolation subject area is two dots that form a pair including an odd-numbered dot and an even-numbered dot. A range of the peripheral pixels referenced when determining the pixel values of the interpolation pixels is one dot on a right side of the interpolation subject area. The calculation of the feature quantities is performed for respective elements of RGB digital signals.

A feature quantity is an indicator indicating a degree of divergence in pixel values when a pixel positioned in the interpolation subject area is compared with other pixels positioned in the interpolation subject area and the peripheral pixels. Specifically, the feature quantity is calculated by a determination of an absolute value of a difference between the pixel value of a focused pixel within the pixels positioned in the interpolation subject area, and a mean value of the pixel values of each pixel positioned in the interpolation subject area and the pixel values of the peripheral pixels. For example, if the feature quantity is large, the feature quantity indicates that the pixel has significantly changed compared to the peripheral pixels (in other words, a pixel characterizing the image). If the feature quantity is small, the feature quantity indicates that the pixel has changed little from the peripheral pixels.

When described using the example in Fig. 12, first, regarding a digital signal "R" of original RGB digital signals, the image interpolation device 310 determines the absolute value of the difference between a pixel value "P1" of a "Pixel 1" positioned in an interpolation subject area A and the mean value of pixel values "P1" and "P2" of the "Pixel 1" and a "Pixel 2" positioned in the interpolation subject area A and a pixel value "P3" of a peripheral pixel "Pixel 3". The image interpolation device 310 calculates a feature quantity |P1-(P1+P2+P3)/3| of the "Pixel 1". Similarly, the image interpolation device 310 calculates a feature quantity |P2-(P1+P2+P3)/3| of the "Pixel 2". In this way, the feature quantities of the "Pixel 1" and the "Pixel 2" in the digital signal "G" and the digital signal "B" are similarly calculated.

The image interpolation device 310 similarly calculates the feature quantities of a "Pixel 3" and a "Pixel 4" positioned in an interpolation subject area B, the feature quantities of a "Pixel 5" and a "Pixel 6" positioned in an interpolation subject area C, and the feature quantities of a "Pixel m" and a "Pixel n" positioned in an interpolation subject area N.

Next, the image interpolation device 310 determines the pixel values of the interpolation pixels based on the pixels positioned in the interpolation subject area, to preferentially use the pixel value of the pixel characterizing an image in an original image as the pixel value of the interpolation pixels. Specifically, the image interpolation device 310 determines the pixel value of the pixel having a feature quantity that exceeds a threshold, among the pixels positioned in the interpolation subject area, to be the pixel value of the interpolation pixels.

By the image interpolation device 310 determining the pixel value of the pixel exceeding the threshold that is acceptable for copying the pixel characterizing the image in the original image to be the pixel value of the interpolation pixels in this way, the pixel value of the pixel characterizing the image in the original image can be preferentially used as the pixel value of the interpolation pixels. The image quality degradation accompanying the resolution conversion of the image data can be suppressed. Furthermore, in relation to this, through use of the pixel value of the pixel characterizing the image in the original image without processes such as averaging and weight-averaging being performed, an image of the original image (in other words, the original image prior to the resolution conversion) can be easily maintained.

For example, when the feature quantity |P1-(P1+P2+P3)/3| of the "Pixel 1" is equal to a threshold "THRESH" or more, as in the interpolation subject area A, the pixel value of the interpolation pixels (in other words, the interpolation subject area A) is determined to be the pixel value "P1" of the "Pixel 1". When both feature quantities of the "Pixel 1" and the "Pixel 2" are equal to the threshold or more, the pixel value of the pixel having the larger feature quantity is preferably used as the pixel value of the interpolation pixels.

When both the feature quantity of the "Pixel 5" and the feature quantity of the "Pixel 6" is less than the threshold "THRESH", the pixel value "P5" and the pixel value "P6" of the "Pixel 5" and the "Pixel 6" positioned in the interpolation subject area C are respectively determined to be the pixel values of the interpolation pixels (in other words, the interpolation subject area C).

Therefore, in terms of the above-described example of the conventional art, through uniform creation of the interpolation data in which the image data from the periphery of the position at which the image data are to be interpolated are averaged or weight-averaged, interpolation data in which the pixel characterizing the image data is ambiguously processed are not created. Rather, by the pixel value of the pixel exceeding the threshold that is acceptable for copying the pixel characterizing the image in the original image being determined to be the pixel value of the interpolation pixels, the pixel value of the pixel characterizing the image in the original image can be preferentially used as the pixel value of the interpolation pixels. The image quality degradation accompanying the resolution conversion of the image data can be suppressed, as in the above-described main characteristic.

Furthermore, in relation to this, by the use of the pixel value of the pixel characterizing the image in the original image without processes such as averaging and weight-averaging being performed, the image of the original image (in other words, the original image prior to the resolution conversion) can be easily maintained.

### First Example

Next, the image interpolation device according to the first example will be described. Here, after a configuration of the image interpolation device according to the first example is described, procedures of the various processes of the image interpolation device will be described.

### Configuration of the image interpolation device

Fig. 10 is a block diagram of the configuration of the image interpolation device according to the first example. The image interpolation device 310 includes an image data inputting unit 311, an image data input controlling unit 312, a feature quantity calculating unit 313, an image interpolation processing unit 314, a resolution calculation processing unit 315, a display control processing unit 316, and the display unit 317.

The image data inputting unit 311 is a processing unit that inputs the image data outputted from the AV unit 320 and/or the navigation unit 330 to the feature quantity calculating unit 313, based on an image data input instruction from the image data input controlling unit 312. According to the first example, an example is given in which the DVD video image is inputted from the AV unit 320 (the resolution of the image is 800×480) and the navigation video image is inputted from the navigation unit 330 (the resolution of the image is similarly 800×480).

The image data input controlling unit 312 is a processing unit that controls a number of input systems of the image data inputted from the image data inputting unit 311 to the feature quantity calculating unit 313, depending on the display requests from the AV unit 320 and/or the navigation unit 330.

For example, when the display request for the DVD video image is received from the AV unit 320, the image data input controlling unit 312 instructs the image data inputting unit 311 to input the image data of the DVD video image v1. When the display request for the navigation video image is received from the navigation unit 330, the data input controlling unit 312 instructs the image data inputting unit 311 to input the image data of the navigation video image v2. When the display request for the DVD video image and the display request for the navigation video image are received from the AV unit 320 and from the navigation unit 330, the data input controlling unit 312 instructs the image data inputting unit 311 to input the image data of the DVD video image v1 and the navigation video image v2.

The feature quantity calculating unit 313 is a processing unit that, with regards to the pixels positioned in the interpolation subject area and the peripheral pixels of the pixels, calculates the feature quantities of the pixels based on the image data inputted from the image data inputting unit 311. Specifically, as shown in Fig. 12, first, with regards to the digital signal "R" of the original RGB digital signals, the feature quantity calculating unit 313 determines the absolute value of the difference between the pixel value "P1" of the "Pixel 1" positioned in the interpolation subject area A and the mean value of the pixel values "P1" and "P2" of the "Pixel 1" and the "Pixel 2" positioned in the interpolation subject area A and the pixel value "P3" of the peripheral pixel "Pixel 3". The feature quantity calculating unit 313 calculates the feature quantity |P1-(P1+P2+P3)/3| of the "Pixel 1". Similarly, the feature quantity calculating unit 313 calculates the feature quantity |P2-(P1+P2+P3)/3| of the "Pixel 2". In this way, the feature quantity calculating unit 313 similarly calculates the feature quantities of the "Pixel 1" and the "Pixel 2" in the digital signal "G" and the digital signal "B".

The feature quantity calculating unit 313 similarly calculates the feature quantities of the "Pixel 3" and the "Pixel 4" positioned in the interpolation subject area B, the feature quantities of the "Pixel 5" and the "Pixel 6" positioned in the interpolation subject area C, and the feature quantities of the "Pixel m" and the "Pixel n" positioned in the interpolation subject area N. For the purpose described above, only the image data of the navigation video image is subject to the processes performed by feature quantity calculating unit 313 and the image interpolation processing unit 314. However, the feature quantity calculating unit 313 and the image interpolation processing unit 314 can perform the image interpolation process on both the DVD video image v1 and the navigation video image v2.

The image interpolation processing unit 314 determines the pixel values of the interpolation pixels based on the feature quantities of the pixels positioned in the interpolation subject area. Specifically, the image interpolation processing unit 314 extracts the pixel with the largest feature quantity calculated by the feature quantity calculating unit 313 from among the pixels positioned in the interpolation subject area. If the feature quantity of the extracted pixel is equal to the threshold or more, the image interpolation processing unit 314 determines the pixel value of the pixel to be the pixel value of the interpolation pixels.

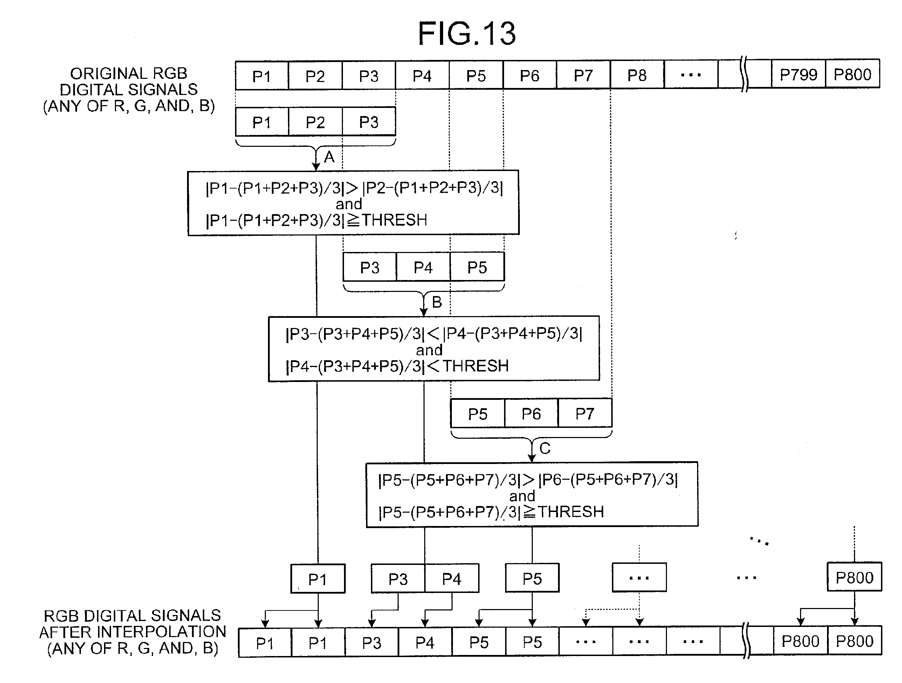

In terms of the example of the interpolation subject area A shown in Fig. 13, first, the image interpolation processing unit 314 compares a size relationship between the feature quantity |P1-(P1+P2+P3)/3 of the "Pixel 1" and the feature quantity |P2-(P1+P2+P3)/3| of the "Pixel 2". The image interpolation processing unit 314 extracts the pixel having the larger feature quantity (for example, "Pixel 1) from among the "Pixel 1" and the "Pixel 2". If the feature quantity of the extracted "Pixel 1" is equal to the threshold "THRESH" or more, the image interpolation processing unit 314 determines the pixel value "P1" of the "Pixel 1" to be the pixel value of the interpolation pixels (in other words, the interpolation subject area A).

When the feature quantity of the extracted "Pixel 4" is less than the threshold "THRESH", as in the interpolation subject area B, the pixel values "P3" and "P4" of the "Pixel 3" and the "Pixel 4" positioned in the interpolation subject area B are respectively determined to be the pixel values of the interpolation pixels (in other words, the interpolation subject area B).

Through the extraction of the pixel with the largest feature quantity from among the pixels positioned in the interpolation subject area in this way, the pixel having the highest probability of characterizing the image in the original image can be extracted from within the interpolation subject area. The pixel value of the pixel characterizing the image in the original image can be preferentially used as the pixel value of the interpolation pixels.

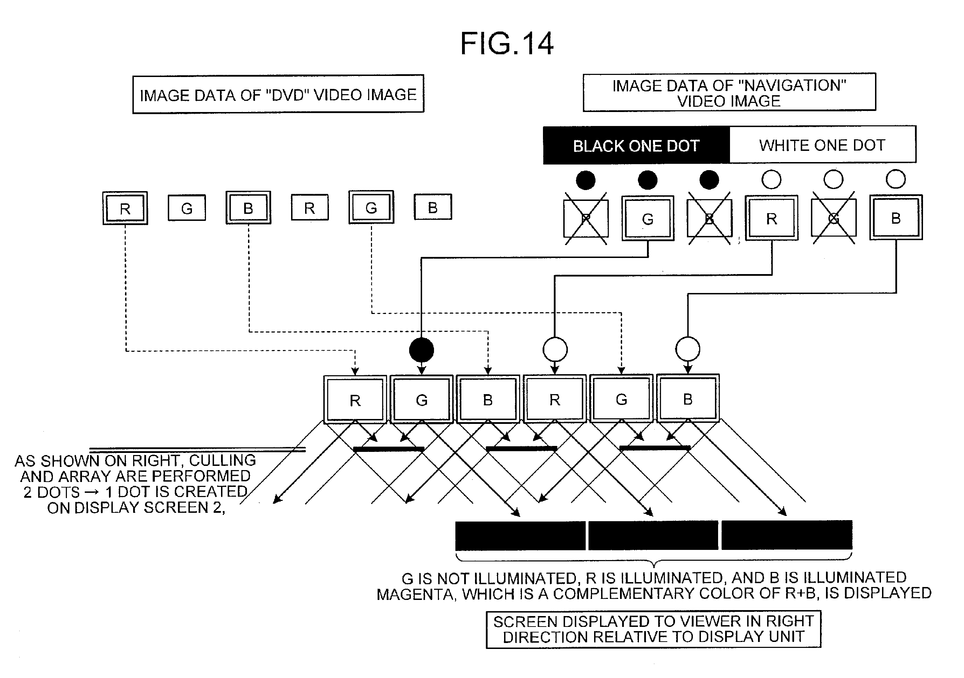

The resolution conversion processing unit 315 is a processing unit that performs the resolution conversion on a plurality of pieces of image data of which the interpolation pixels have been interpolated by the image interpolation processing unit 314. For example, when the image data of the DVD video image v1 and the image data of the navigation video image v2 inputted from the image interpolation processing unit 314 are displayed in the display unit 7 using the two-perspective display configuration, the RGB digital signals are aligned in a dot array such as that shown in Fig. 14.

Therefore, the resolution conversion processing unit 315 performs the 1/2 horizontal resolution conversion in which "G" of odd-numbered dots in the image data of the DVD video image v1 are culled and, additionally, "R" and "B" of even-numbered dots are culled.

At the same time, the resolution conversion unit 315 performs the 1/2 horizontal resolution conversion in which "R" and "B" of the odd-numbered dots in the image data of the navigation video image v1 are culled and, additionally, "G" of the even-numbered dots are culled.

By the resolution conversion being performed on the image data of which the interpolation pixels have been interpolated by the image interpolation process in this way, the resolution conversion can be performed while suppressing the image quality degradation of the image data.

The display control processing unit 316 is a processing unit that performs control to realign the image data to which the resolution conversion has been performed by the resolution conversion processing unit 315 to a predetermined display configuration (the two-perspective display configuration in the first example) and display the realigned image data. Specifically, the display control processing unit 316 performs a realignment processing for realigning the RGB digital signals of the DVD video image v1 and the navigation video image v2 to which the resolution conversion has been performed by the resolution conversion processing unit 315 to the dot array shown in Fig. 14 (in other words, a process for alternately realigning the digital signals "R", "B", and "G" in the DVD video image and the digital signals "G", "R", and "B" in the navigation video image). The display control processing unit 316 displays the realigned RGB digital signals.

In the example shown in Fig. 14, regarding one dot targeting the viewer in the right direction relative to the display unit 317, G is not illuminated, R is illuminated, and B is illuminated. Therefore, magenta, which is a complementary color of "R"+"B", is displayed to the viewer in the right direction relative to the display unit 317 (the passenger on the driver's seat side).

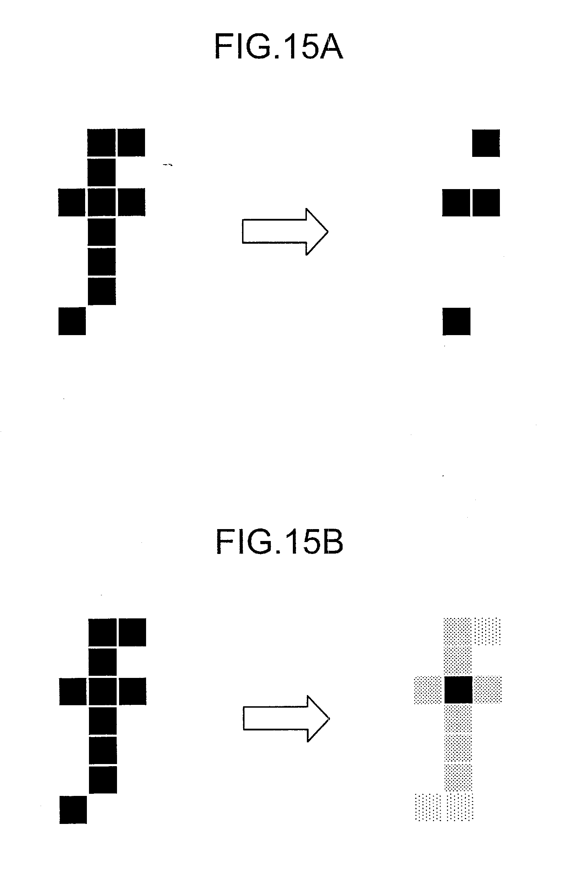

Compared to the pixel data shown in Fig. 15A in which original pixels are merely extracted as a pixel group of either the pixels in an even-numbered array or the pixels in an odd-numbered display over one frame, in the video image pixel data created through these processes, high-range elements indicating that the change between pixels is high (large) remain, as shown in Fig. 15B. Therefore, the image quality is not significantly degraded. A certain degree of good visibility can be ensured.

By control being performed in this way so that the image data including at least one piece of image data to which the resolution conversion has been performed are realigned to the predetermined configuration and displayed, the image data can be displayed in various configurations in one display unit without a new configuration being provided.

### Procedures of various processes

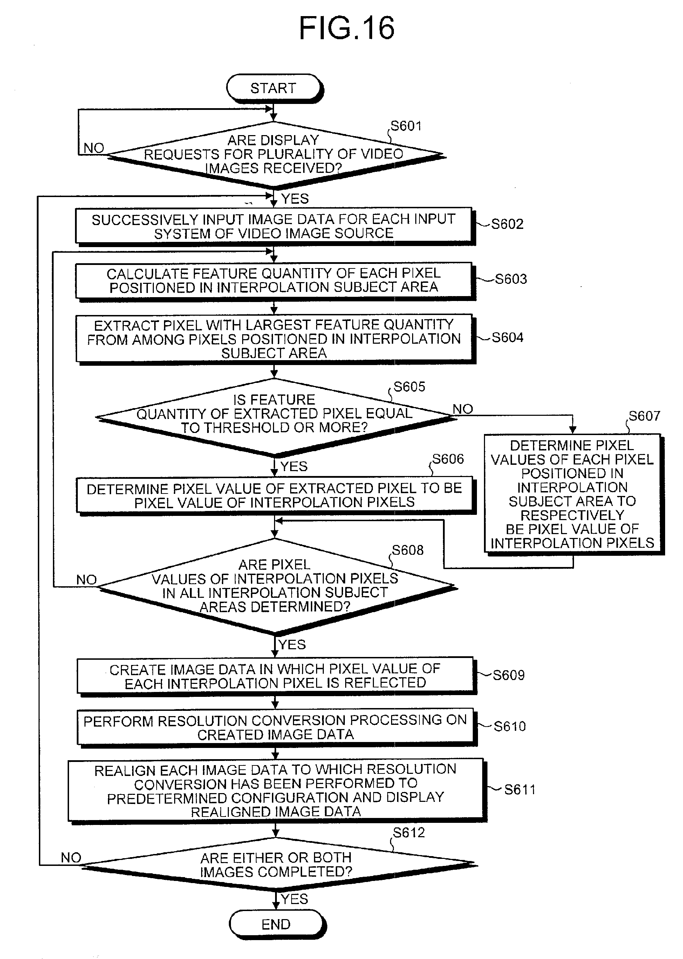

Next, procedures of the various processes of the image interpolation device according to the first example will be described. Fig. 16 is a flowchart of the procedures of the image interpolation process. When the display request for the DVD video image and the display request for the navigation video image are received from the AV unit 320 and the navigation device 330, the image interpolation process is started if display configuration settings of the plurality of display requests are a shared display configuration, such as the two-screen display or the two-perspective display, and not an exclusive display setting.

When the display request for the DVD video image and the display request for the navigation video image are received from the AV unit 320 and the navigation device 330 (Step S601; Yes), the image data inputting unit 311 inputs the image data to the feature quantity calculating unit 313 for each input system of the DVD video image v1 and the navigation video image v2 (Step S602).

Then, the feature quantity calculating unit 313 successively calculates the feature quantities of the pixels positioned within the interpolation subject area, based on the image data inputted from the image data inputting unit 311 (Step S603). Next, the image interpolation processing unit 314 extracts the pixel with the largest feature quantity calculated by the feature quantity calculating unit 313 from among the pixels positioned in the interpolation subject area (Step S604).

When the feature quantity of the extracted pixel is equal to the threshold or more (Step S605; Yes), the image interpolation processing unit 314 determines the pixel value of the pixel to be the pixel value of the interpolation pixels (Step 5606). At the same time, when the feature quantity of the extracted pixel is less than the threshold (Step S605; No), the pixel value of each pixel positioned in the interpolation subject area is respectively determined to be the pixel values of the interpolation pixels (Step S607).

Then, when the pixel values of the interpolation pixels are determined for all interpolation subject areas (Step S608; Yes), the image interpolation processing unit 314 creates the image data in which the pixel value of each interpolation pixel is reflected (Step S609). When the pixel values of the interpolation pixels in all interpolation subject areas are not determined (Step S608; No), the process from Step S603 to Step S607 are recursively performed until the pixel values of the interpolation pixels for all interpolation subject areas are determined.

Next, the resolution conversion processing unit 315 respectively performs the 1/2 horizontal resolution conversion process on the image data of the navigation video image and the image data of the DVD video image, of which the interpolation pixels have been interpolated by the image interpolation processing unit 314 (Step S610).

Then, the display control processing unit 316 realigns the image data of the navigation video image and the image data of the DVD video image to which the 1/2 resolution conversion has been performed by the resolution conversion processing unit 315 to the predetermined display configuration and displays the image data of the navigation video image and the image data of the DVD video image (Step S611).

Lastly, when either the navigation video image or the DVD video image or both the navigation video image and the DVD video image are completed (Step S612; Yes), the process is completed. When both the navigation video image and the DVD video image are not completed (Step S612; No), the process from Step S602 to Step S611 are repeated.

As described above, in the image interpolation device 310 according to the first example, the pixel with the largest feature quantity is extracted from the pixels positioned in the interpolation subject area. When the feature quantity of the extracted pixel is equal to or more than the threshold, the pixel value of the pixel is determined to be the pixel value of the interpolation pixels. Therefore, the pixel having the highest probability of characterizing the image in the original image is extracted from the interpolation subject area. The pixel value of the extracted pixel can be preferentially used as the pixel value of the interpolation pixels. The image quality deterioration accompanying the resolution conversion of the image data can be more effectively suppressed. Second example

An example of the present invention has been described above. However, in addition to the first example described above, the present invention can be achieved by various differing examples within the technical scope described in the scope of claims.

For example, in the first example, when the display requests (in other words, the display requests for the DVD video image and the navigation video image) are received, an example in which the image interpolation process according to the present invention is performed has been described. However, the present invention is not limited thereto. The present invention can be applied regardless of whether the display request is a single request or a plurality of requests. In particular, in the present invention, a much higher effect can be achieved by the image interpolation process according to the present invention being applied to the image data requiring the resolution conversion (for example, when the resolution conversion for a relatively small display unit, such as a mobile phone, is required), even when the display request is a single request.

In the first example, a following example has been described. The pixel with the largest feature quantity calculated by the feature quantity calculating unit 313 is extracted from among the pixels positioned in the interpolation subject area. When the feature quantity of the extracted pixel is less than the threshold, the pixel value of each pixel positioned in the interpolation subject area is respectively determined to be the pixel values of the interpolation pixels. However, the present invention is not limited thereto. If the feature quantity of the extracted pixel is less than the threshold, a pixel value that is an average of the pixel values of the pixels positioned in the interpolation subject area can be determined to be the pixel value of the interpolation pixels.

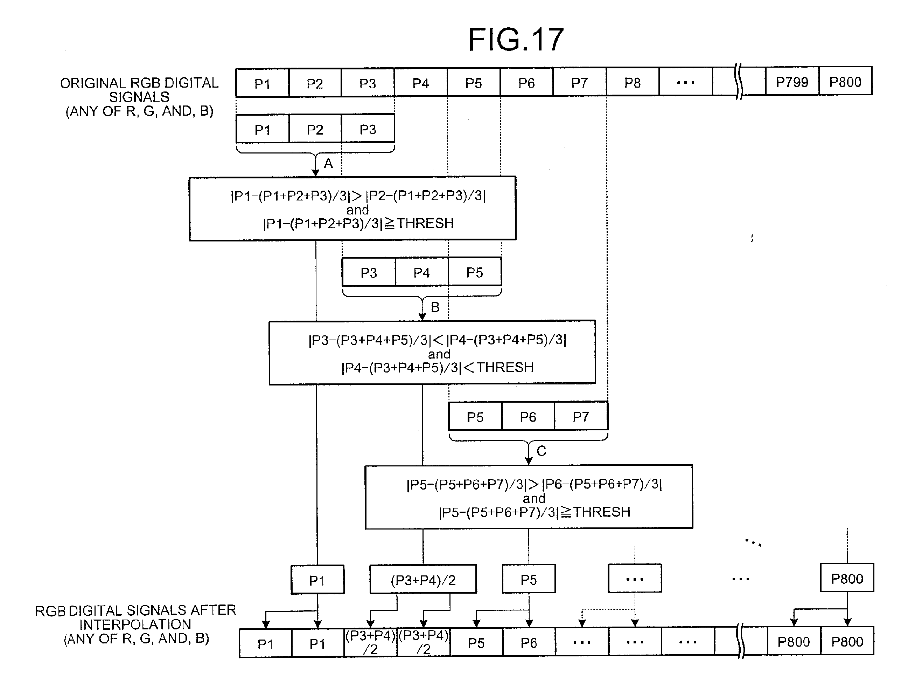

In terms of the example in Fig. 17, when the feature quantity of the extracted "Pixe1 4" is less than the threshold "THRESH", as in the interpolation subject area B, the pixel value "(P3+P4)/2" that is the average of the "Pixel 3" and the "Pixel 4" positioned in the interpolation subject area B is respectively determined to be the pixel value of the interpolation pixels (in other words, the interpolation subject area B).

When the pixel with the largest feature quantity calculated by the feature quantity calculating unit 313 is extracted from among the pixels positioned in the interpolation subject area and the feature quantity of the extracted pixel is less than the threshold, the pixel value that is the average of the pixel values of the pixels positioned in the interpolation subject area is determined to be the pixel value of the interpolation pixels. As a result, a large-scale image interpolation process can be performed when the luminance levels of adjacent pixels are not divergent. The image quality degradation accompanying the resolution conversion of the image data can be effectively suppressed.

In the present invention, the difference in the pixel values between the pixels positioned in the interpolation subject area is calculated. When the absolute value of the difference in the pixel values between the pixels positioned in the interpolation subject area is equal to the threshold or more, the pixel value that is the average of the pixel values of the pixels positioned in the interpolation subject area can be determined to be the pixel value of the interpolation pixels.

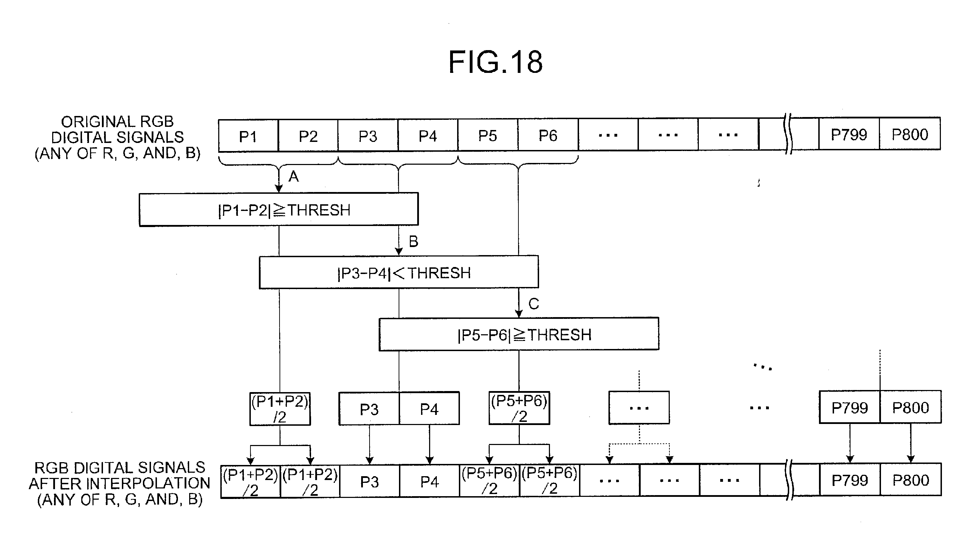

For example, in terms of the example in Fig. 18, the difference in the pixel values between the pixels "Pixel 1" and "Pixel 2" positioned in the interpolation subject area A (in other words, "P1-P2") is calculated. If the absolute value of the difference in the pixel value between the pixels positioned in the interpolation subject area (in other words, |P1-P2|) is equal to the threshold "THRESH" or more, the pixel value "(P1-P2)/2" that is the average of the pixel values of the pixels "Pixel 1" and "Pixel 2" positioned in the interpolation subject area A is determined to be the pixel value of the interpolation pixels. The image interpolation process is similarly performed on the interpolation subject area B, the interpolation subject area C,... and the interpolation subject area N.

When the difference in the pixel values between the pixels positioned in the interpolation subject area is calculated and the absolute value of the difference in the pixel values between the pixels positioned in the interpolation subject area is equal to the threshold or more in this way, the pixel value that is the average of the pixel values of the pixels positioned in the interpolation subject area is determined to be the pixel value of the interpolation pixels. As a result, a large difference in the luminance levels occurring locally can be smoothed. The image quality degradation accompanying the resolution conversion of the image data can be effectively suppressed.

In the first example, an example in which video image signals inputted from the image interpolation device 310 are composite signals (RGB format) is described. However, the present invention is not limited thereto. The present invention can be similarly applied even when the video image signals of another format, such as YC format, are inputted.

Among each process described in the example, all or some of the processes that have been described as being performed automatically can be performed manually. On the other hand, all or some of the processes that have been described as being performed manually can be performed automatically by a known method. In addition, information including processing procedures, control procedures, specific names, and various data and parameters (for example, resolutions and resolution conversion rates) indicated within the text above and shown within the diagrams can be arbitrarily changed unless otherwise noted.

Respective constituent elements of each device shown in the diagrams are functional concepts and are not necessarily required to be configured as shown in the diagram. In other words, specific configurations of dispersal and integration of each device are not limited to that shown in the diagram. Depending on various loads, usage conditions, and the like, all or some of the devices can be functionally or physically dispersed or integrated in arbitrary units. Furthermore, all or an arbitrary number of respective processing functions performed in each device can be actualized by the CPU and a program analytically executed by the CPU. Alternatively, the processing functions can be actualized as hardware using wired logic.

The present example is described using the two-screen display configuration displaying two screens on a single display and the two-perspective display configuration outputting two differing video images in two directions as examples. However, a multi-screen display configuration displaying a plurality of screens that are three or more and a multi-direction display configuration outputting differing video images in a plurality of directions that are three or more can be used.

The present example is described using a device mounted on a vehicle as an example. However, use of the present invention is not limited thereto. For example, the present invention can also be applied to a display device other than that used in a vehicle, such as that for household use.

### INDUSTRIAL APPLICABILITY

As described above, the image interpolation device and the display device of the present invention is effective for interpolating images. In particular, the present invention is suitable for a resolution conversion maintaining the characteristics of the original image.

## Claims

1. An image interpolation device that performs an image interpolation process for determining pixel values of interpolation pixels to be interpolated in an interpolation subject area, based on pixels positioned in the interpolation subject area and peripheral pixels of the pixels, the image interpolation device comprising:
a feature quantity calculating unit that calculates feature quantities of the pixels based on the pixels positioned in the interpolation subject area and the peripheral pixels of the pixels; and
an image interpolation processing unit that performs the image interpolation process for determining the pixel values of the interpolation pixels based on calculated feature quantities.

2. The image interpolation device according to claim 1, wherein the image interpolation processing unit determines a pixel value of a pixel with a feature quantity that is equal to a threshold or more, among the pixels positioned in the interpolation subject area, to be a pixel value of the interpolation pixels.

3. The image interpolation device according to claim 1, wherein
the feature quantity calculating unit calculates a difference in pixel values of the pixels positioned in the interpolation subject area; and
the image interpolation processing unit determines, when an absolute value of the difference is equal to a threshold or more, a pixel value that is an average of the pixel values of the pixels positioned in the interpolation subject area to be the pixel value of the interpolation pixels.

4. The image interpolation unit according to claim 1, wherein the image interpolation processing unit extracts a pixel having largest feature quantity from among the feature quantities of the pixels positioned in the interpolation subject area calculated by the feature quantity calculating unit, and, when the feature quantity of extracted pixel is equal to a threshold or more, determines the pixel value of the pixel to be the pixel value of the interpolation pixels.

5. The image interpolation device according to claim 4, wherein the image interpolation processing unit extracts a pixel having the largest feature quantity from among the feature quantities of the pixels positioned in the interpolation subject area, and, when the feature quantity of the extracted pixel is less than the threshold, determines a pixel value that is an average of the pixel values of the pixels positioned in the interpolation subject area to be the pixel value of the interpolation pixel.

6. The image interpolation device according to claim 1, further comprising a resolution conversion processing unit that performs a resolution conversion process on image data of which interpolation pixels have been interpolated by the image interpolation processing unit.

7. The image interpolation processing device according to claim 6, further comprising a display controlling unit that performs control to realign a plurality of pieces of image data including at least one piece of image data on which the resolution conversion process has been performed by the resolution conversion processing unit to a predetermined configuration and display the realigned image data.

8. A display device comprising:
a display unit that displays on a single screen an individual image corresponding to each of a plurality of viewing directions;
a feature quantity calculating unit that calculates feature quantities of pixels based on pixels positioned in an interpolation subject area of the images and peripheral pixels of the pixels;
an image interpolation processing unit that decides pixel values of interpolation pixels based on calculated feature quantities; and
a display controlling unit that creates image data of the interpolation pixels using the pixel values of the interpolation pixels determined by the image interpolation processing unit and displays the image data on the display unit.
